# EUROPEAN PATENT APPLICATION

(11) **EP 2 075 145 A1**
(43) Date of publication of application: **01.07.2009**
(21) Application number: 08102999.3
(22) Date of filing: 27.03.2008
(51) Int. Cl.: B60G 17/019, G01G 19/08

(54) **Method and system for detecting the load of a vehicle equipped with non-pneumatic suspensions**

(30) Priority: 18.12.2007 EP 07123491
(71) Applicant: Iveco S.p.A., 10156 Torino (IT)
(72) Inventor: Stuerner, Johann, 89079 Ulm (DE); Bertozzi, Franco, 10040 Druento (IT)
(74) Representative: Borsano, Corrado

(57) **Abstract**

Method and system for detecting the load of a vehicle, in particular an industrial vehicle, provided with non-adjustable suspensions, such as elastic spring suspensions, like the leaf springs, used for the measurement of the height variation of the vehicle or of the deformation of at least part of said suspensions. It is possible to determine the load on each axle and/or the overall load weighing on the vehicle.

## Description

### FIELD OF THE INVENTION

This invention relates to a method and system for detecting the load weighing on the axles of a vehicle, in particular an industrial vehicle, and a vehicle equipped with this system.

### DESCRIPTION OF THE PRIOR ART

In the industrial vehicle field it is important to know the overall load of the vehicle and, often, also the load weighing on each axle. This is to comply with the limits imposed by the law and to safely use the vehicle. It is often difficult, however, to obtain this information. It may be necessary, for example, to weigh the vehicle several times during the loading operations, in order to make maximum use of its capacity, without exceeding the limits. Therefore it is necessary to have a weighing machine and the loading operations are excessively time-consuming. Moreover, the weighing machine will give information about the overall load, but not about the load per axle and about the load distribution inside the vehicle.

Industrial vehicles, especially road vehicles, are equipped with pneumatic suspensions. These suspensions allow to bring the height of the chassis to a predetermined value on its different axles, regardless of the load, thanks to the possibility to introduce (or to remove) compressed air taken from an appropriate circuit.

The vehicles intended to transport interchangeable boxes are provided with pneumatic suspensions on every axle, which allows to rise or to let down the chassis in order to release or to hook the box. There are also other types of vehicles with pneumatic suspension on every axle, in order to reduce the overall height or to improve the comfort. On these vehicles there is a system for detecting the load weighing on the axles, comprising pressure sensors which measure the pressure of the air in each suspension. The data detected by the various sensors, after being processed, for example, by an on-board electronic control unit according to predetermined methods, allow to know the load weighing on each axle with a considerable precision. An appropriate display may give this information to the driver, in order to make the weighing of the vehicle unnecessary, and to make the loading operations much faster.

Most of the vehicles for which it would be useful to know the information about the load weighing on each axle, or at least the overall load, however, are not equipped with pneumatic suspensions, or not all their axles are equipped with pneumatic suspensions. Therefore for these vehicles it is impossible to estimate the load, or the estimation of the load may be based only on partial data, making it not reliable enough, especially in case of partial or unbalanced load. The vehicles which are usually not equipped with pneumatic suspensions are, for example, those which are not intended to run on the road, such as machine vehicles and construction vehicles, semi-trailers, even if the tractor may be equipped with pneumatic suspensions, at least on the rear axle.

### SUMMARY OF THE INVENTION

The problems described above have been solved according to the present invention by a method for detecting the load weighing on each axle of a vehicle, in particular of an industrial vehicle, equipped with combined pneumatic and mechanical suspensions, or only with mechanical suspensions, comprising the measuring of the load weighing on said axles, being equipped with either mechanical suspensions or pneumatic mechanical suspensions.

The measuring of the load weighing on an axle equipped with mechanical suspensions may be carried out by measuring the variation of the height of the chassis with respect to said axle, preferably in correspondence of said suspensions. The term mechanical suspension refers to any type of non-pneumatic suspension, since for the pneumatic suspensions, as said, the measuring of the load weighing on the axle to which it is connected, may be carried out by simply reading the pressure value in the pneumatic circuit, according to what is already known in the art. The mechanical suspensions may be common elastic suspensions, for example comprising springs, such as leaf springs. Generally these suspensions are not adjustable, that is they cannot be adjusted after every loading or unloading operation in order to bring the vehicle to a predetermined height, which distinguishes them from the pneumatic suspensions described above which are adjustable. According to a preferred embodiment, the method comprises the measurement of the height of the vehicle chassis in two points on at least one axle, preferably in correspondence of the suspensions of said axle, or at a point in the middle of the axle.

In this measurement both the overall load of the vehicle and the load of one or more axles may be calculated, preferably of every axle.

The invention relates also to a system for detecting the load of a vehicle provided with suspensions comprising at least a sensor suitable for detecting the deformation of at least one of said suspensions and a vehicle provided with said system.

This invention refers in particular to what mentioned in the claims attached hereto.

### LIST OF THE FIGURES

This invention will be explained by means of a detailed description of preferred, but non-exclusive, embodiments shown with the help of the drawings that are attached hereto, which are merely illustrative and not-limitative, in which:
figure 1 represents the diagram of a detail of a system according to the invention, comprising a sensor;
figure 2 represents a more general diagram of a system according to the invention.

### DETAILED DESCRIPTION OF AN EMBODIMENT OF THE INVENTION

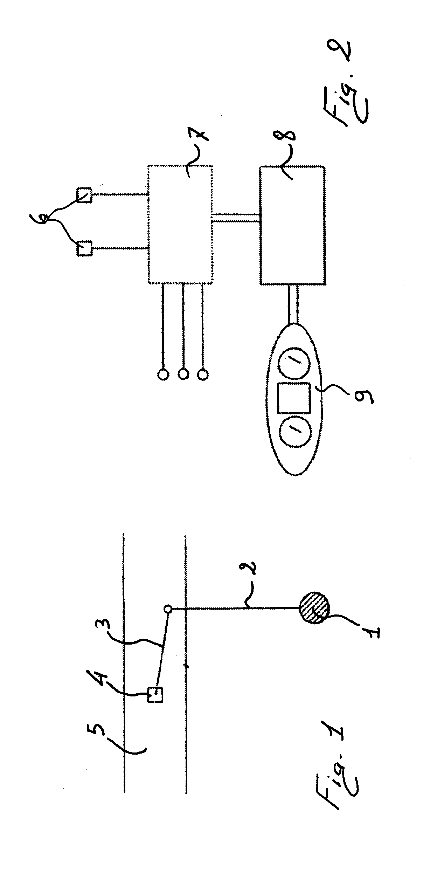

Figure 1 represents the diagram of a sensor used in the method according to this invention. The method according to this invention comprises the use of means suitable for detecting the load weighing on the axles equipped with mechanical suspensions. In particular, as said, these means can detect the variations of the distance between the axle and the chassis, according to what will be described in the preferred embodiment shown as an example of the following present invention and in the drawings attached hereto, or they can detect the deformation of the suspension itself, by means of appropriate deformation transducers that are well known in the mechanical field.

Going back to what shown in figure 1, here is the case wherein said means for detecting the load weighing of the axle equipped with pneumatic suspension comprise a sensor for detecting the variation of the height of the vehicle.

The sensor may be of any of the appropriate known type, for example a Hall effect rotation sensor. Other appropriate sensors are rack sensors and optical sensors, but there are no restrictions on the type of sensor. Level sensors are traditionally used with the adjustable pneumatic suspensions described above, but only with the purpose to allow the chassis level to reach a predetermined value. The sensor for detecting the variation of the vehicle height according to what described here comprises an adjustable bar 2, which is fixed with respect to an axle of the vehicle. This bar is hinged to an extremity of the bar 3, whose other extremity is free to rotate and is comprised in the measurement cell 4, integral with the chassis, for example with the side member 5. The rotation of the bar 3 is detected by the cell 4 and depends on the height of the chassis on the axle, measuring, this way, the variation of the height of the chassis on the axle, that is the variation of the distance between the chassis 5 and the axle 1. The height of the chassis depends, in its turn, on the deformation of the suspensions which depends on the load weighing on the axle. For this reason, the detection of the load weighing on the axle may be carried out both by means of the sensor described above, which detects the variation of the distance between the chassis and the axle, and by means of a sensor directly measuring the deformation of the mechanical suspension.

According to a preferred aspect of the invention, the sensor for detecting the variation of the vehicle height is duly placed in correspondence of the suspension or in the middle of an axle. Preferably there are two sensors per axle, one sensor in correspondence of each suspension, or one sensor placed in the middle of each axle, more preferably all the axles are equipped this way. The data detected by the sensor may be used for the calculation of the load weighing on each axle, by means of an appropriate mathematical logic. The overall load is, obviously, the sum of all the loads. If needed, It is also possible that only part of the axles are provided with the sensors. If the pneumatic suspensions as described above are present on part of the axles, it is possible to apply the method according to the present invention. In this case the pneumatic suspensions may be provided with pressure sensors for detecting the load, as in the prior art described above, while on the axles which are not equipped with pneumatic suspension or whose suspension are not adjustable, the detection of the load may be carried out with the method described in the present invention.

More in detail, at present the vehicles equipped with adjustable pneumatic suspensions on their rear axles are largely widespread, because these axles have to carry the main part of the load and therefore it is more important to have on them a pneumatic system that allows to keep the height constant, regardless of the load, while on the front axles most of the vehicle have mechanical suspension. Less state-of-the-art vehicles may have mechanical suspension on all their axles.

The method according to this invention, and in particular the use of means suitable for detecting the load weighing on the axles equipped with mechanical suspensions, may therefore be used on a wide range of vehicles.

With reference to figure 2, the data detected by the sensors 6 (the sensors shown in figure are only two and refer to one axle, but the diagram is applied to all the sensors) are collected by a control unit 7 which may process and send them to an on-board computer, which may control the showing of the processed data on a display on the dashboard 9 of the vehicle, or anyway make them available to the driver in an appropriate way. It should be noted that the on-board computer and the control unit may be integrated in a single electronic unit and the scheme of the electronic system may be adequately modified.

The method and system according to this invention allow to quickly know the information about the load on vehicles which are not equipped with adjustable suspensions, when the variation of the vehicle height and the deformation of the suspensions depends on the load. It is particularly advantageous in case of construction vehicles, machine vehicles, but also road vehicles. It may also be applied on the axles of a semi-trailer; in this case it will be necessary to provide the vehicle with a connection suitable for transmitting the data of the whole vehicle to the tractor, for example by means of a data transmission bus.

In particular, the method for detecting the load according to the present invention may be easily and effectively used in all those cases wherein it is useful to count the goods, in case of a vehicle hauling goods. More in detail, it is known for example that in the field of the garbage collection, the firm which manages the collection is paid according to the quantity, expressed in weight, of garbage delivered to the garbage collection center. The evaluation of the quantity of material unloaded to the garbage collection or to the garbage incineration center are also useful to those managing the collection center or the incineration oven.

At present, in order to quantify the load of a vehicle carrying out the garbage collection, scales or weighing machines for industrial vehicle have been used. This involves a loss of time for the weighing operations, but also the need to get such scales, which are expensive and very bulky.

The method for detecting the load according to this invention, in case it was used for detecting the load of a vehicle for garbage transport, would immediately make available the load data to the driver and to the garbage collection firm, making unnecessary the use of a scale. As a consequence, this results in a saving of time, because the weighing operation will not be carried out anymore, and in a saving of money, because it would be no longer necessary to buy and to maintain a truck weighing machine or to specially prepare some place devoted to said weighing machine and to the weighing operations of the load

Another application field where the method for detecting the load according to the present invention would be extremely useful to quantify the goods loaded and unloaded by degrees, is the case of the distribution to different customers of a product carried in a tank. The calculation of the volume of the distributed product may be carried out by means of the measurement of the variation of the load weight.

In several other application fields it may be very useful to know the value of the carried load, and the method according to this invention fulfils the need to make the overall load value immediately available to the driver.

For example, the indication of the load weighing on each axle and of the overall load may be used for the electronic control of functional parameters of the engine, of the transmission, of the electronic management of the braking system, besides the management of the tyre pressure according to the load.

Therefore several other application fields may exist.

The system may be calibrated in an appropriate way, in order to know the overall weight, which includes the weight of the empty vehicle, or the weight of the carried load. This and other ways of managing the obtainable data may be developed according to the needs of the person skilled in the art.

The invention relates also to a computer program, suitable for running on a control unit or on an on-board computer as described above, with the function to calculate the load of a vehicle or the load weighing on one or more axles of a vehicle, on the basis of the data on the deformation of the suspensions of said vehicle.

## Claims

1. Method for detecting the load of a vehicle, in particular a vehicle intended to be used for transportation, equipped with suspensions, comprising the stage for measuring the load weighing on at least one axle with mechanical suspension, using means suitable for the measuring of the variation of the height of such vehicle.

2. Method according to claim 1, wherein the measurement comprises the measurement of the variation of the height of the chassis with respect to the axle (1) upon which each of said suspension operates.

3. Method according to claim 1 or 2, wherein said measurement is carried out in two points or in a middle point for each axle, in correspondence of the two suspensions acting on the axle.

4. Method according to claim 1, wherein said measurement of the variation of the height of the vehicle comprises the measurement of the deformation of at least a part of said suspension.

5. Method according to any of the previous claims, wherein said means for the measurement of the variation of the height of the vehicle comprise appropriate sensors (6) and the data detected by said sensors are processed by an appropriate electronic unit (7, 8).

6. Method according to the previous claim, wherein said sensors (6) comprise a kinematic mechanism (2, 3) suitable to transform the variation of the height of the vehicle, intended as the variation of the distance of the axle (1) from the chassis (5), in a movement of a part (3) of said kinematic mechanism suitable to be detected by a measurement cell (4).

7. Method according to any of the previous claims, wherein the load weighing on one or more axles is detected.

8. Method according to any of the previous claims, wherein the overall load of the vehicle is detected.

9. System for detecting the load of a vehicle, in particular an industrial vehicle, provided with suspensions, suitable to carry out the method according to any of the previous claims from 1 to 8.

10. System for detecting the load of a vehicle according to the previous claim, comprising sensors (6) suitable for measuring the height of the chassis on at least part of said axles (1).

11. System according to claim 9 or 10, comprising two sensors or a middle sensor for each considered axle.

12. System according to any of the previous claims from 9 to 11, comprising a control unit (7, 8) suitable to process the data collected by said sensors.

13. Computer program suitable for calculating the load of a vehicle or the load weighing on one or more axles of a vehicle, on the basis of the data on the height variation of said vehicle.

14. Computer program suitable for calculating the load of a vehicle or the load weighing on one or more axles of a vehicle, on the basis of the data on the deformation of the suspensions of said vehicle.

15. Vehicle, in particular industrial vehicle, provided with a system according to any claim from 9 to 12.

16. Vehicle for goods transport, in particular for garbage transport, **characterized in that** it comprises a system for detecting the load according to one or more previous claims.
